Europäisches Patentamt

European Patent Office

Office européen des brevets

(11) Veröffentlichungsnummer: **0 397 002**
**A1**

(12) **EUROPÄISCHE PATENTANMELDUNG**

(21) Anmeldenummer: 90108205.7

(22) Anmeldetag: 30.04.90

(51) Int. Cl.⁵: **F15D 1/00, F17D 1/17,**
**C10L 1/16, F17D 1/16**

(30) Priorität: 09.05.89 DE 3915071

(43) Veröffentlichungstag der Anmeldung:
**14.11.90 Patentblatt 90/46**

(84) Benannte Vertragsstaaten:
**DE DK GB**

(71) Anmelder: **BASF Aktiengesellschaft**
**Carl-Bosch-Strasse 38**
**D-6700 Ludwigshafen(DE)**

(72) Erfinder: **Martischius, Franz-Dieter, Dr.**
**Neubergstrasse 73**
**D-6730 Neustadt(DE)**
Erfinder: **Raab, Bernard**
**In den elf Morgen 2**
**D-6845 Gross-Rohrheim(DE)**
Erfinder: **Karau, Dieter**
**Johann-Sebastian-Bach Strasse 10**
**D-6831 Plankstadt(DE)**

(54) Verfahren zur Verbesserung der fliesswiderstandsvermindernden Eigenschaften hochmolekularer Polymerlösungen in Rohöl oder Raffinerieprodukten.

(57) Verfahren zur (Fließwiderstandsverminderung von Rohöl oder Raffinerieprodukten in Rohrleitungen (Pipelines) bei turbulenter Strömung durch Zugabe von hochmolekularen öllöslichen Polymeren z.B. Polyisobuten und/oder Poly-$\alpha$-Olefinen in die Rohrleitungen, dadurch gekennzeichnet, daß als hochmolekulares öllösliches Polymeres eine 3 bis 10, vorzugsweise 5 bis 8 gew.-%ige Lösung von Polyisobuten in Rohöl oder Raffinerieprodukten durch eine oder mehrere Düsen injiziert wird, die sich konisch mit Winkeln zwischen 3 und 30° verjüngen und bei einer Länge von 0,5 bis 15 cm und einer Verweilzeit der Polymerlösung von $10^{-3}$ s bis 10 s im konischen Teil der Düse eine Dehngeschwindigkeit von 0,1 bis 100 $s^{-1}$ ermöglichen, um dann mit einer Düsenaustrittsgeschwindigkeit von 2 bis 30 %, vorzugsweise 5 bis 15 % der mittleren Fließgeschwindigkeit des Rohöls oder des Raffinerieproduktes in der Rohrleitung in den Rohöl- oder Raffinatstrom einzutreten.

EP 0 397 002 A1

# Verfahren zur Verbesserung der fließwiderstandsvermindernden Eigenschaften hochmolekularer Polymerlösungen in Rohöl oder Raffinerieprodukten

Die vorliegende Erfindung betrifft ein Verfahren zur Fließwiderstandsverminderung von Rohöl oder Raffinerieprodukten in Rohrleitungen bei turbulenter Strömung.

Unter Fließwiderstandsverminderung bei turbulenter Strömung versteht man die Beeinflussung der Turbulenzstruktur mit dem Ziel, entweder bei konstantem Durchsatz den Druckverlust zu reduzieren oder bei maximaler Pumpenleistung den Durchsatz zu steigern.

Die meisten industriellen Anwendungen der Fließwiderstandsverminderung finden beim Rohöl- oder Raffinerieprodukt-Transport statt. In der Regel werden hochmolekulare Polymere auf $\alpha$-Olefinbasis oder Polyisobuten eingesetzt. Üblicherweise werden diese Polymere als etwa 5 bis 15 %ige Stammlösung zur Anwendungsstelle transportiert und dort, eventuell nach einer Vorverdünnung, in die Rohrleitung injiziert. Es ist weiter bekannt, daß die hochmolekularen Polymeren extrem empfindlich gegenüber mechanischer Beanspruchung sind. So führt beispielsweise das Durchlaufen von als Zentrifugalpumpen ausgelegten Rohrleitungspumpen häufig zum Kettenbruch der Polymeren und damit zu einem vollständigen Verlust der Wirksamkeit. Folgerichtig ist es Stand der Technik, die Polymerlösungen für die Fließwiderstandsverminderung unter weitestgehender Vermeidung mechanischer Beanspruchungen möglichst schonend in die Rohrleitung zu injizieren.

Es war die Aufgabe der vorliegenden Erfindung, ein Verfahren der eingangs genannten Art anzugeben, mit dem eine Verbesserung der fließwiderstandvermindernden Eigenschaften hochmolekularer Polymerlösungen in Rohöl oder Raffinerieprodukten erzielt werden kann.

Diese Aufgabe wurde erfindungsgemäß dadurch gelöst, daß eine gezielte mechanische Beanspruchung der hochmolekularen Polymerlösung realisiert wird. In der 1. Stufe erfolgt die mechanische Beanspruchung dadurch, daß die hochmolekulare Polymerlösung durch eine oder mehrere Düsen injiziert wird, die sich konisch mit Winkeln zwischen 3 und 30 ° verjüngen und bei einer Länge von 0,5 bis 15 cm und einer Verweilzeit der Polymerlösung von $10^{-3}$ s bis 10 s im konischen Teil der Düse eine Dehngeschwindigkeit von 0,1 bis 100 $s^{-1}$ ermöglichen. Danach wird in der 2. Stufe die Polymerlösung aufgrund der Geschwindigkeitsdifferenz zwischen der mittleren Fließgeschwindigkeit des Rohöls oder des Raffinerieproduktes in der Rohrleitung und der Düsenaustrittsgeschwindigkeit der polymerlösung nochmals mechanisch beansprucht, wobei die Düsenaustrittsgeschwindigkeit 2 bis 30 %, vorzugsweise 5 bis 15 %, der mittleren Fließgeschwindigkeit des Rohöls oder des Raffinerieproduktes in der Rohrleitung beträgt. Eine mechanische Beanspruchung dieser Art führt zu einer Verbesserung der fließwiderstandsvermindernden Eigenschaften der hochmolekularen Polymerlösungen in Rohöl oder Raffinerieprodukten.

## Beispiel 1

Eine 7 gew.-%ige Lösung von Polyisobuten mit einem Molekulargewicht $\overline{M}_v = 8 \cdot 10^6$ in Petroleum wurde durch eine konische Düse bei einer Dehngeschwindigkeit von 2,1 $s^{-1}$ mit einer Düsenaustrittsgeschwindigkeit von 0,11 m/s in die Rohrleitung (Ø = 390 mm) injiziert. Die mittlere Fließgeschwindigkeit des Rohöls betrug vor der Injektion der Polymerlösung 1,05 m/s, im Laufe der Injektionsdauer von 8 h stieg die mittlere Fließgeschwindigkeit in der Rohrleitung auf 1,32 m/s an. Das entspricht einer Durchsatzsteigerung von 19,8 %

## Beispiel 2

Unter sonst gleichen Bedingungen wie bei Beispiel 1 wurde die 7 gew.-%ige Lösung von Polyisobuten mit dem Molekulargewicht $\overline{M}_v = 8 \cdot 10^6$ in Petroleum ohne mechanische Beanspruchung in dem konischen Teil einer Düse durch eine Bohrung mit dem Durchmesser d = 12 mm in die Rohrleitung (Ø = 390 mm) injiziert. Im Laufe der Injektionsdauer von 8 h stieg die mittlere Fließgeschwindigkeit in der Rohrleitung nur auf 1,18 m/s an.

## Beispiel 3

Eine 7 gew.-%ige Lösung von Polyisobuten mit einem Molekulargewicht $\overline{M}_v = 8 \cdot 10^6$ in Petroleum wurde durch eine konische Düse bei einer Dehngeschwindigkeit von 2,1 $s^{-1}$ mit einer Düsenaustrittsgeschwindigkeit von 0,11 m/s in die Rohrleitung (Ø = 390 mm) injiziert. Die mittlere Fließgeschwindigkeit des Rohöls betrug vor der Injektion der Polymerlösung 1,05 m/s, im Laufe der Injektionsdauer von 8 h stieg die mittlere Fließgeschwindigkeit in der Rohrleitung auf 1,36 m/s an.

## Beispiel 4

Die unter Beispiel 3 beschriebene Lösung (7 Gew.-%, $\overline{M}_v = 10 \cdot 10^6$) wurde durch eine konische Düse bei unveränderter Dehngeschwindigkeit von 2,1 s$^{-1}$ mit einer Düsenaustrittsgeschwindigkeit von 0,44 m/s injiziert. Die mittlere Fließgeschwindigkeit des Rohöls betrug vor der Injektion der

Polymerlösung 1,05 m/s, im Laufe der Injektionsdauer von 8 h stieg die mittlere Fließgeschwindigkeit in der Rohrleitung nicht meßbar an.

Beispiel 5

Eine 7 gew.-%ige Lösung von Polyisobuten mit einem Molekulargewicht $\overline{M}_v = 8 \cdot 10^6$ in Petroleum wurde durch 2 konische Düsen bei einer Dehngeschwindigkeit von 2,1 s$^{-1}$ mit einer Düsenaustrittsgeschwindigkeit von 0,09 m/s in die Rohrleitung (Ø = 390 mm) injiziert. Die mittlere Fließgeschwindigkeit des Rohöls betrug vor der Injektion der Polymerlösung 1,05 m/s, im Laufe der Injektionsdauer von 8 h stieg die mittlere Fließgeschwindigkeit in der Rohrleitung auf 1,34 m/s an.

Ansprüche

1. Verfahren zur Fließwiderstandsverminderung von Rohöl oder Raffinerieprodukten in Rohrleitungen (Pipelines) bei turbulenter Strömung durch Zugabe von hochmolekularen öllöslichen Polymeren z.B. Polyisobuten und/oder Poly-$\alpha$-Olefinen in die Rohrleitungen, dadurch gekennzeichnet, daß als hochmolekulares öllösliches Polymeres eine 3 bis 10, vorzugsweise 5 bis 8 gew.-%ige Lösung von Polyisobuten in Rohöl oder Raffinerieprodukten durch eine oder mehrere Düsen injiziert wird, die sich konisch mit Winkeln zwischen 3 und 30° verjüngen und bei einer Länge von 0,5 bis 15 cm und einer Verweilzeit der Polymerlösung von 10$^{-3}$ s bis 10 s im konischen Teil der Düse eine Dehngeschwindigkeit von 0,1 bis 100 s$^{-1}$ ermöglichen, um dann mit einer Düsenaustrittsgeschwindigkeit von 2 bis 30 %, vorzugsweise 5 bis 15 % der mittleren Fließgeschwindigkeit des Rohöls oder des Raffinerieproduktes in der Rohrleitung in den Rohöl- oder Raffinatstrom einzutreten.

2. Verfahren nach Anspruch 1, dadurch gekennzeichnet, daß mehrere Düsen hintereinander angeordnet werden, parallel angeordnet werden oder Kombinationen von Parallel- und Reihenanordnungen vorgesehen sind.

3. Verfahren nach den Ansprüchen 1 und 2, dadurch gekennzeichnet, daß Polyisobuten mit Molekulargewichten zwischen 1$\cdot$10$^6$ und 40$\cdot$10$^6$, vorzugsweise 5$\cdot$10$^6$ und 20$\cdot$10$^6$ verwendet wird.

Europäisches
Patentamt

**EUROPÄISCHER RECHERCHENBERICHT**

Nummer der Anmeldung

EP 90 10 8205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 215 154  (WHITE et al.) <br> * Insgesamt * <br> --- | 1,3 | F 15 D    1/00 <br> F 17 D    1/17 <br> C 10 L    1/16 <br> F 17 D    1/16 |
| A | EP-A-0 196 350  (CONOCO INC.) <br> * Insgesamt * <br> --- | 1,3 | |
| A | EP-A-0 299 721  (CONOCO INC.) <br> * Insgesamt * <br> --- | 1-3 | |
| A | EP-A-0 314 504  (CONOCO INC.) <br> * Insgesamt * <br> --- | 1-3 | |
| A | EP-A-0 134 168  (SOC. NAT. IND. AEROSPATIALE) <br> * Fig. * <br> --- | 2 | |
| A | GB-A-2 039 225  (SHOWA DENKO K.K.) <br> * Fig. * <br> ----- | 2 | |
| | | | **RECHERCHIERTE SACHGEBIETE (Int. Cl.5)** <br><br> C 10 L <br> F 15 D <br> F 17 D <br> B 01 F |

Der vorliegende Recherchenbericht wurde für alle Patentansprüche erstellt

| Recherchenort | Abschlußdatum der Recherche | Prüfer |
|---|---|---|
| DEN HAAG | 17-08-1990 | DE LA MORINERIE B.M.S.B. |